# EUROPÄISCHE PATENTANMELDUNG

(11) **EP 4 778 785 A1**
(43) Veröffentlichungstag der Anmeldung: **22.07.2026**
(21) Anmeldenummer: 25152159.7
(22) Anmeldetag: 16.01.2025
(51) Int. Cl.: B60P 1/44, B60P 3/20

(54) **NUTZFAHRZEUG MIT LADEBORDWAND**

(71) Anmelder: Schmitz Cargobull AG, 48341 Altenberge (DE)
(72) Erfinder: QWEIDER, Samir, 48703 Stadtlohn (DE); GELKING, Eva, 48619 Heek (DE); LUDWIG, Jonas, 48691 Vreden (DE)
(74) Vertreter: Cohausz & Florack

(57) **Zusammenfassung**

Beschrieben und dargestellt ist ein Nutzfahrzeug (1), insbesondere Lastkraftwagen, Anhänger oder Sattelauflieger, mit einem Aufbau (4), insbesondere Kofferaufbau, und einer von einer Nichtgebrauchsstellung in eine Gebrauchsstellung wenigstens teilweise hinter dem Aufbau (4) und zurück verstellbaren Ladebordwand (12), wobei der Aufbau (4) einen einen unteren Querholm (17) umfassenden Rückwandrahmen (9) aufweist, wobei dem unteren Querholm (17) wenigstens ein Rückwandanschlag (25) und wenigstens eine Überfahrnase (22) zugeordnet ist, wobei die Ladebordwand (12) in der Gebrauchsstellung mit wenigstens einem Ladebordanschlag (34) an dem wenigstens einen Rückwandanschlag (25) in Anlage ist. Damit das Be- und Entladen sicher und zuverlässig wahlweise sowohl an einer Laderampe als auch über eine Ladebordwand erfolgen kann, ist vorgesehen, dass die wenigstens eine Überfahrnase (22) und der wenigstens eine Rückwandanschlag (25) mit dem unteren Querholm (17) des Rückwandrahmens (9) verschraubt sind und dass der wenigstens eine Rückwandanschlag (25) unterhalb des Überfahrbereichs (Ü) der wenigstens einen Überfahrnase (22) angeordnet ist.

## Beschreibung

Die Erfindung betrifft ein Nutzfahrzeug, insbesondere Lastkraftwagen, Anhänger oder Sattelauflieger, mit einem Aufbau, insbesondere Kofferaufbau, und einer von einer Nichtgebrauchsstellung in eine Gebrauchsstellung wenigstens teilweise hinter dem Aufbau und zurück verstellbaren Ladebordwand, wobei der Aufbau einen einen unteren Querholm umfassenden Rückwandrahmen aufweist, wobei dem unteren Querholm wenigstens ein Rückwandanschlag und wenigstens eine Überfahrnase zugeordnet ist, wobei die Ladebordwand in der Gebrauchsstellung mit wenigstens einem Ladebordanschlag an dem wenigstens einen Rückwandanschlag in Anlage ist.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, welche der Aufnahme der zu transportierenden Ladung in einem Laderaum dienen. So sind beispielsweise Planenaufbauten bekannt, die wenigstens eine Plane zum Verschließen wenigstens einer Seite und/oder eines Dachs des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die den Laderaum seitlich begrenzenden Seitenwände und das Dach durch feste Wände verschlossen. Auch die den Laderaum nach vorne begrenzende Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach und die Stirnwand sowie bedarfsweise die Rückwandtüren von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport geeignet.

Bei Kühltransporten ist in der Regel sicherzustellen, dass die Temperatur der temperaturempfindlichen Güter einen von den jeweiligen Gütern abhängigen Temperaturgrenzwert nicht übersteigt, um Qualitätsminderungen der Güter zu verhindern. Deshalb weisen die für den Kühltransport eingesetzten Kofferaufbauten typischerweise eine sogenannte Transportkältemaschine auf, mit der eine aktive Kühlung des Laderaums und somit der in dem Laderaum aufgenommenen Güter bzw. Ladung erfolgen kann. Dabei ist die Transportkältemaschine meist an der Stirnwand des Kofferaufbaus vorgesehen, insbesondere montiert.

Zum Be- und Entladen werden die Nutzfahrzeuge der beschriebenen Art oft mit geöffneten an einem Rückwandrahmen des Aufbaus gehaltenen Rückwandtüren rückwärts an eine sogenannte Laderampe herangefahren, über welche die Aufbauten mehr oder weniger ebenerdig Be- und Entladen werden können. Weist der Aufbau anstelle von Rückwandtüren ein Rolltor auf, kann dieses auch erst nach dem Anfahren der Laderampe geöffnet werden. Meist bildet die Laderampe eine Art U-förmige Schleuse, welche das rückwärtige Ende des Aufbaus aufnimmt. Von der Laderampe wird zudem meist eine sogenannte Überfahrbrücke auf das hintere Ende des Ladebodens des Aufbaus gelegt, so dass mit Hubwagen oder dergleichen problemlos von der Laderampe in den Aufbau hinein und wieder zurück gefahren werden kann. Um Beschädigungen des Aufbaus beim Heranfahren an die Ladebordwand zu vermeiden, sind einem unteren Querholm des Rückwandrahmens sogenannte Rammpuffer zugeordnet, welche aus Gummi oder Kunststoff gebildet sind und somit Energie beim Anstoßen der Rammpuffer an die Laderampe aufnehmen können. Diese Energie könnte andernfalls zu einer Beschädigung des Aufbaus führen.

Zudem werden Nutzfahrzeuge teilweise mit einer sogenannten Ladebordwand ausgestattet, die zwischen einer Nichtgebrauchsstellung und einer Gebrauchsstellung hin und her verstellt werden kann. Vor dem eigentlichen Ladungstransport mit dem Nutzfahrzeug wird die Ladebordwand in die Nichtgebrauchsstellung verstellt. In der Gebrauchsstellung ist die Ladebordwand wenigstens teilweise und wenigstens im Wesentlichen horizontal hinter dem unteren Querholm des Rückwandrahmens angeordnet. In dieser Gebrauchsstellung kann zum Zwecke des Be- und Entladens beispielsweise mit einem Hubwagen oder dergleichen von der Ladebordwand in den Aufbau hinein und wieder zurück gefahren werden. Zudem lässt sich die Ladebordwand auf den Untergrund absenken und wieder anheben, so dass mit dem Hubwagen zwischen dem Untergrund und der Ladebordwand hin und her gefahren werden kann.

Dem unteren Querholm des Rückwandrahmens ist zudem eine sogenannte Überfahrnase zugeordnet. Diese stellt sicher, dass zwischen dem Ladeboden des Aufbaus und der Ladebordwand in der Gebrauchsstellung kein übermäßiger Spalt besteht, der von einem Hubwagen nicht oder nur unter erschwerten Bedingungen überwunden werden kann. Damit die Ladebordwand in der Gebrauchsstellung definiert und wiederholt in die vorgesehene Position relativ zu dieser Überfahrnase gebracht werden kann, liegt die Ladebordwand in der Gebrauchsstellung mit wenigstens einem Ladebordanschlag an wenigstens einem Rückwandanschlag des Aufbaus an.

Bei Nutzfahrzeugen mit Ladebordwänden, die ebenfalls dazu vorgesehen sind, über eine Laderampe be- und entladen zu werden, bestehen Zielkonflikte hinsichtlich der Ausgestaltung des unteren Querholms. Einerseits soll eine geeignete Überfahrnase und ein entsprechend geeigneter Rückwandanschlag bereitgestellt werden. Andererseits ist der untere Querholm in geeigneter Weise mit Rammpuffern auszustatten, die Beschädigungen insbesondere von der Überfahrnase und den Rückwandanschlägen verhindern sollen.

Daher liegt der vorliegenden Erfindung die Aufgabe zugrunde, das Nutzfahrzeug der eingangs genannten und zuvor näher erläuterten Art derart auszugestalten und weiterzubilden, dass das Be- und Entladen sicher und zuverlässig wahlweise sowohl an einer Laderampe als auch über eine Ladebordwand erfolgen kann.

Diese Aufgabe ist bei einem Nutzfahrzeug nach dem Oberbegriff des Anspruchs 1 dadurch gelöst, dass die wenigstens eine Überfahrnase und der wenigstens eine Rückwandanschlag mit dem unteren Querholm des Rückwandrahmens verschraubt sind und dass der wenigstens eine Rückwandanschlag unterhalb des Überfahrbereichs der wenigstens einen Überfahrnase angeordnet ist.

Es ist erfindungsgemäß vorgesehen, die wenigstens eine Überfahrnase und den wenigstens einen Rückwandanschlag mit dem unteren Querholm zu verschrauben. Dies bedeutet, dass sowohl die Überfahrnase als auch der Rückwandanschlag vom unteren Querholm durch Abschrauben getrennt werden kann. Dies kann bedeuten, dass der Rückwandanschlag und die Überfahrnase zusammen vom unteren Querholm abgeschraubt werden müssen. Denkbar ist auch, dass erst der Rückwandanschlag abgeschraubt werden muss, bevor die Überfahrnase abgeschraubt werden kann. Dabei kann alternativ oder zusätzlich vorgesehen sein, dass der Rückwandanschlag an der Überfahrnase verschraubt ist, während die Überfahrnase an dem unteren Querholm verschraubt ist. Möglicherweise ist der Rückwandanschlag sowohl mit der Überfahrnase als auch mit dem unteren Querholm verschraubt. Durch die Verschraubung der Überfahrnase und des Rückwandanschlags kann erreicht werden, dass diese beiden Bauteile bei der Bestimmung der genehmigungsrechtlichen Gesamtlänge des Nutzfahrzeugs unberücksichtigt bleiben können, da diese nicht dauerhaft und untrennbar mit dem Rest des Nutzfahrzeugs verbunden sind.

Die Anordnung der wenigstens einen Überfahrnase und des wenigstens einen Rückwandanschlags erlaubt es ferner, den wenigstens einen Rückwandanschlag unterhalb der wenigstens einen Überfahrnase anzuordnen. Dadurch wird nicht nur das Überfahren der Überfahrnase positiv beeinflusst, sondern auch ein Schutz des Rückwandanschlags beim Anfahren einer Laderampe verbessert. Zudem führt eine Beschädigung der Überfahrnase bei unsachgemäßem Gebrauch des Nutzfahrzeugs bzw. bei einem unsachgemäßen Be- und/oder Entladen des Aufbaus nicht zwangsweise auch zu einer Beschädigung der Überfahrnase. Dies ist umso bedeutender, wenn zum Zwecke der Reparatur sowohl die wenigstens eine Überfahrnase als auch der wenigstens eine Rückwandanschlag vom unteren Querholm abgeschraubt werden können.

Bei einer besonders bevorzugten Ausgestaltung des Nutzfahrzeugs ist die Ladebordwand in der Nichtgebrauchsstellung unterhalb des Aufbaus angeordnet. Mithin verschließt die Ladebordwand nicht die Rückwand des Aufbaus. Die Ladebordwand ist dann auch nicht hinter den Rückwandtüren oder einem Rolltor der Rückwand angeordnet, so dass die Ladebordwand nicht genehmigungsrechtlich zur Länge des Nutzfahrzeugs hinzugezählt werden muss. Ein weiterer Vorteil besteht darin, dass der Aufbau bedarfsweise über eine Laderampe Be- und Entladen werden kann, und zwar auf die übliche Weise bei geöffneten Rückwandtüren oder geöffnetem Rolltor. Damit die Ladebordwand in der Nichtgebrauchsstellung platzsparend unter dem Aufbau angeordnet werden kann, bietet es sich weiter an, wenn die Ladebordwand zwei um eine Schwenkachse gegeneinander faltbare Bordwandteile aufweist. Die Bordwandteile können dann zur Verkürzung der Ladebordwand in der Nichtgebrauchsstellung aufeinander gefalteten sein. Beim Verstellen der Ladebordwand von der Nichtgebrauchsstellung in die Gebrauchsstellung wird dann beispielsweise das hintere Bordwandteil um das vordere Bordwandteil nach hinten geschwenkt, so dass das hintere Bordwandteil in Verlängerung des vorderen Bordwandteils und vorzugsweise fluchtend zu diesem angeordnet ist.

Wenn die wenigstens eine Überfahrnase und der wenigstens eine Rückwandanschlag als separate Bauteile ausgebildet sind, können beide im Reparaturfall unabhängig voneinander ausgetauscht werden, was den Reparaturaufwand verringert. Zudem kann auf die Montage des wenigstens einen Rückwandanschlags bedarfsweise verzichtet werden, wenn ein Nutzfahrzeug nicht mit einer Ladebordwand ausgestattet werden soll. Nicht zuletzt kann auch die Überfahrnase einfacher ausgestaltet werden, wenn diese nicht auch noch Funktionen des Rückwandanschlags übernehmen muss.

Alternativ oder zusätzlich kann die wenigstens eine Überfahrnase und der wenigstens eine Rückwandanschlag separat mit dem unteren Querholm verschraubt sein. Durch eine solche separate Verbindung der wenigstens einen Überfahrnase und des wenigstens einen Rückwandanschlags können diese einfach und doch sehr stabil am unteren Querholm des Rückwandrahmens angebracht werden. Im Falle einer unsachgemäßen Handhabung des Nutzfahrzeugs können folglich hohe Kräfte, etwa infolge einer Kollision, an den Rückwandrahmen abgeleitet werden, ohne dass es zu einer Beschädigung des wenigstens einen Rückwandanschlags oder der wenigstens einen Überfahrnase kommt.

Als besonders vorteilhaft hat es sich erwiesen, wenn die wenigstens eine Überfahrnase einen oberen Überfahrschenkel und einen unteren Montageschenkel aufweist. Dann kann platz- und materialsparend eine stabile Überfahrnase bereitgestellt werden. Zudem kann der Montageschenkel einfach und für eine sehr stabile Verbindung der Überfahrnase mit dem unteren Querholm des Rückwandrahmens genutzt werden. Dies gilt in besonderem Maße, wenn der Überfahrschenkel wenigstens im Wesentlichen horizontal und der Montageschenkel wenigstens im Wesentlichen vertikal ausgerichtet ist. In diesem Fall kann eine große Anlagefläche zwischen dem Montageschenkel und dem unteren Querholm bereitgestellt werden.

Folglich bietet es sich bei entsprechenden Überfahrnasen an, wenn der Montageschenkel mit dem unteren Querholm des Rückwandrahmens verschraubt ist. So kann auch ausreichend Bauraum für das Verschrauben der Überfahrnase mit dem unteren Querholm bereitgestellt werden. Dies ist in besonderem Maße der Fall, wenn der Montageschenkel rückseitig zu dem unteren Querholm und überlappend mit dem unteren Querholm vorgesehen ist. Auf diese Weise wird auch verhindert, dass die Überfahrnase das Be- und/oder Entladen des Aufbaus behindert.

Alternativ oder zusätzlich kann der wenigstens eine Rückwandanschlag mit der wenigstens einen Überfahrnase verschraubt sein. Dies kann die Montage des Rückwandanschlags vereinfachen und aussteifen. Besonders zweckmäßig ist es dabei, wenn der Rückwandanschlag mit dem Montageschenkel der wenigstens einen Überfahrnase verschraubt ist. Dies ist besonders einfach zu bewerkstelligen und kann zu einer weiteren Aussteifung der Verbindung von Überfahrnase und Rückwandanschlag beitragen.

Zur Einsparung von Material kann der wenigstens eine Rückwandanschlag einen wenigstens im Wesentlichen U-förmigen Querschnitt senkrecht zum unteren Querholm des Rückwandrahmens aufweisen. Eine entsprechende Ausgestaltung des Rückwandanschlags führt auch bei geringem Materialeinsatz zu stabilen und somit langlebigen Rückwandanschlägen. Gleiches gilt für den Fall, dass der wenigstens eine Rückwandanschlag einen wenigstens im Wesentlichen U-förmigen Querschnitt parallel zum unteren Querholm des Rückwandrahmens und zu einem Ladeboden des Aufbaus aufweist. Mithin ist es besonders bevorzugt, wenn der wenigstens eine Rückwandanschlag in den beiden vorgenannten Richtungen einen jeweils U-förmigen Querschnitt aufweist.

Ein beschädigungsfreies Anfahren von Laderampen kann ermöglicht werden, wenn an dem unteren Querholm des Rückwandrahmens mehrere gegenüber der wenigstens einen Überfahrnase und dem wenigstens einen Rückwandanschlag nach hinten vorstehende Rammpuffer vorgesehen sind. Beim Anfahren einer Laderampe kommen dann vorzugsweise lediglich die Rammpuffer in Kontakt mit der Laderampe. Die wenigstens eine Überfahrnase und der wenigstens eine Rückwandanschlag bleiben davon jedoch unberührt. Dabei können die Rammpuffer sehr einfach in einer geeigneten Position vorgesehen werden, wenn die Rammpuffer mit dem unteren Querholm verschraubt sind.

Zum Zwecke einer einfachen Montage des Aufbaus können die Rammpuffer mit der wenigstens einen Überfahrnase verschraubt sein. Dadurch kann auch ein einfacher Austausch der Rammpuffer gewährleistet werden, wenn diese beispielsweise verschlossen sind. Besonders einfach und zweckmäßig ist es in diesem Fall, wenn die Rammpuffer mit dem Montageschenkel der wenigstens einen Überfahrnase verschraubt sind. Diese Verbindung lässt sich leicht fügen und auch leicht wieder trennen, wenn dies erforderlich werden sollte.

Um einerseits den Aufbau und andererseits den wenigstens einen Rückwandanschlag vor Beschädigungen schützen zu können, bietet es sich an, wenn die Rammpuffer und der wenigstens eine Rückwandanschlag wenigstens im Wesentlichen in einer Reihe längs des unteren Querholms des Rückwandrahmens angeordnet sind. Dies gilt in besonderer Weise, wenn der wenigstens eine Rückwandanschlag zwischen wenigstens zwei Rammpuffern angeordnet ist. Die Aufnahme des wenigstens einen Rückwandanschlags zwischen den Rammpuffern macht einen Kontakt des wenigstens einen Rückwandanschlags mit der Laderampe sehr unwahrscheinlich.

Die zuvor beschriebenen Vorteile kommen in besonderem Maße zum Tragen, wenn am Rückwandrahmen Rückwandtüren festgelegt sind. In einem solchen Fall ist es zur Einsparung von unnötiger Baulänge des Nutzfahrzeugs zweckmäßig, wenn in der wenigstens einen Überfahrnase, insbesondere in dem Überfahrschenkel, wenigstens eine Aussparung zum Durchgreifen einer Verriegelungsstange einer Rückwandtür vorgesehen ist. Die Überfahrnase kann so zweckmäßig zum Überfahren etwa mit einem Hubwagen oder dergleichen genutzt werden und dennoch ermöglichen, dass die wenigstens eine Verriegelungsstange der wenigstens einen Rückwandtür im Bereich der Überfahrnase angeordnet wird.

Die wenigstens eine Verriegelungsstange zum Verriegeln der wenigstens einen Rückwandtür kann mit einem Nocken in einem Schloss am unteren Querholm des Rückwandrahmens formschlüssig festgelegt werden. Eine zuverlässige Verriegelung der Verriegelungsstange an dem zugehörigen Schloss kann gewährleistet werden, wenn das Schloss zum formschlüssigen Halten eines Nockens der Verriegelungsstange mit dem unteren Querholm des Rückwandrahmens verschraubt ist.

Die Montage des wenigstens einen Schlosses an dem unteren Querholm kann einfach erfolgen, wenn das wenigstens eine Schloss durch wenigstens eine Aussparung in der wenigstens einen Überfahrnase hindurchgreift. Dies gilt umso mehr, wenn das Schloss durch eine Aussparung im Montageschenkel hindurchgreift. Des Weiteren wird so eine ungewünschte Manipulation des Schlosses durch Dritte verhindert. Nicht zuletzt kann eine Reparatur oder ein Austausch der Überfahrnase und, bedarfsweise des Rückwandanschlags, erfolgen, ohne dass hiervon das wenigstens eine Schloss am unteren Querholm betroffen wäre.

Um auch das wenigstens eine Schloss zum formschlüssigen Festlegen der wenigstens einen Verriegelungsstange an dem unteren Querholm vor einer Beschädigung beim Anfahren an eine Laderampe zu schützen, kann das wenigstens eine Schloss sowie die Rammpuffer und/oder der wenigstens eine Rückwandanschlag wenigstens im Wesentlichen in einer Reihe längs des unteren Querholms des Rückwandrahmens angeordnet sein. Dies gilt in besonderer Weise, wenn das wenigstens eine Schloss zwischen wenigstens zwei Rückwandanschlägen und/oder zwischen wenigstens zwei Rammpuffern angeordnet ist.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes von einer Zugmaschine gezogenes Nutzfahrzeug in einer perspektivischen Ansicht,
- Fig. 2: ein Teil der Rückwand des Nutzfahrzeugs aus Fig. 1 in einer Draufsicht von hinten,
- Fig. 3: den unteren Teil des Rückwandrahmens der Rückwand aus Fig. 2 in einer perspektivischen Ansicht,
- Fig. 4A-E: den unteren Teil des Rückwandrahmens von Fig. 3 in verschiedenen Schnittansichten senkrecht zur Längserstreckung des unteren Teils des Rückwandrahmens und in einer Schnittansicht parallel zur Längserstreckung des unteren Teils des Rückwandrahmens und senkrecht zur Rückwand und
- Fig. 5A-C: das Nutzfahrzeug aus Fig. 1 mit der Ladebordwand in verschiedenen Stellungen in einer Seitenansicht und
- Fig. 6: das Nutzfahrzeug aus Fig. 1 in einer an einer Laderampe herangefahrenen Stellung in einer Seitenansicht.

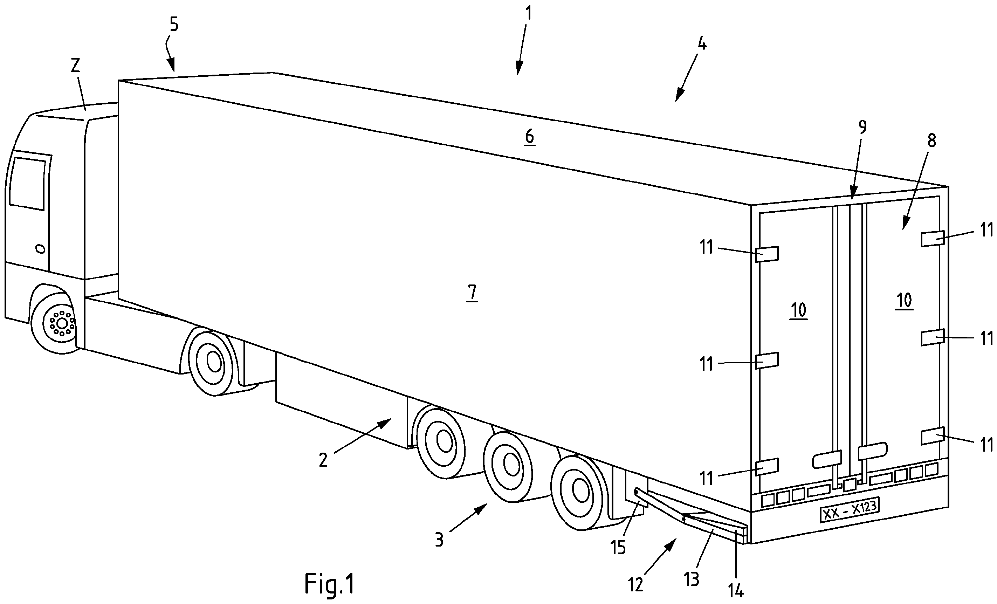

In der Fig. 1 ist ein Nutzfahrzeug 1 in Form eines Sattelaufliegers dargestellt, das von einer Zugmaschine Z gezogen wird und neben einem Chassis 2 und einem daran befestigten Fahrwerk 3 auch einen Aufbau 4 in Form eines Kofferaufbaus aufweist. Der dargestellte Aufbau 4 weist eine feste Stirnwand 5, ein festes Dach 6, feste Seitenwände 7, eine Rückwand 8 und einen Ladeboden auf. Der Ladeboden ist wenigstens im Wesentlichen parallel zum Dach 6 angeordnet und zum Aufstellen von Ladung vorgesehen. Die Rückwand ist der Stirnwand 5 gegenüber angeordnet und umfasst einen umlaufenden Rückwandrahmen 9, in dem zwei Rückwandtüren 10 festgelegen sind. Die Rückwandtüren 10 verschließen den Rückwandrahmen 9, können jedoch zum Be- und Entladen auch um seitliche Scharniere 11 nach außen in Richtung der zugehörigen Seitenwände 7 geschwenkt werden.

Die Stirnwand 5, das Dach 6, die Seitenwände 7 und die Rückwandtüren 10 sind durch Paneele gebildet, die jeweils eine strukturgebende innere Decklage und eine strukturgebende äußere Decklage aufweisen. Die Decklagen können jeweils mehrlagig ausgebildet sein, umfassen jedoch wenigstens eine steife und daher strukturgebende Lage, etwa aus Aluminium, Stahl oder einem faserverstärkten Kunststoff. Zudem können beispielsweise noch Lackschichten oder dergleichen vorgesehen sein. Zwischen den strukturgebenden inneren und äußeren Decklagen ist eine Kernlage aus einem geschäumten Kunststoff vorgesehen. Um den Laderaum des Aufbaus 4 zu kühlen, kann an der Stirnwand 5 eine Transportkältemaschine montiert sein, die Luft aus dem Laderaum ansaugt abkühlt und wieder in den Laderaum zurückbläst.

Unterhalb des beschriebenen Aufbaus 4 ist eine sogenannte Ladebordwand 12 in einer Nichtgebrauchsstellung vorgesehen. Es handelt sich dabei um eine faltbare Ladebordwand mit zwei Bordwandteilen 13,14, die in der Nichtgebrauchsstellung aufeinander geschwenkt vorgesehen sind. Die Bordwandteile 13,14 können durch einen Ladebordmechanismus 15 in eine Gebrauchsstellung hinter dem Aufbau 4 verstellt werden, wie dies später noch im Einzelnen beschrieben wird.

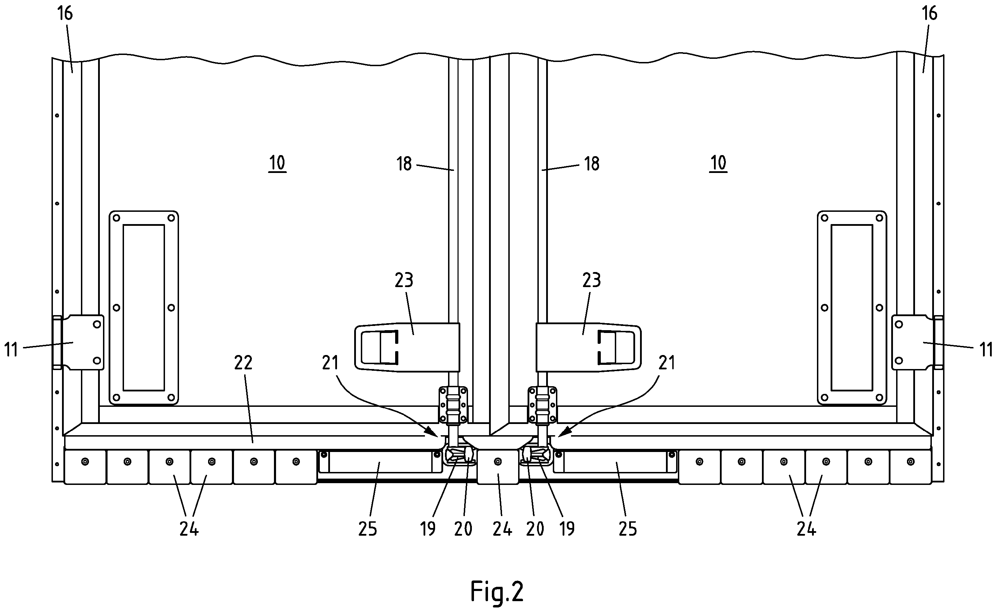

In der Fig. 2 ist ein Detail der Rückwand 8 vergrößert dargestellt. Die beiden Rückwandtüren 10 sind über die seitlichen Scharniere 11 an seitlichen Stützen 16 des Rückwandrahmens 9 festgelegt, die seitlichen Stützen 16 sind über einen oberen Querholm und einen unteren Querholm 17 miteinander verbunden. In der dargestellten, geschlossenen Stellung der Rückwandtüren 10 sind diese mittels Verriegelungsstangen 18 verriegelt, wobei die Verriegelungsstangen 18 formschlüssig mit dem Rückwandrahmen 9 verbunden sind. Dazu weisen die Verriegelungsstangen 18 Nocken 19 auf, die formschlüssig in Schlösser 20 am unteren Querholm 17 des Rückwandrahmens 9 eingehakt sind. Die Verriegelungsstangen 18 sind am oberen Querholm des Rückwandrahmens 9 analog formschlüssig festgelegt.

Am unteren Querholm 17 des Rückwandrahmens 9 sind die Verrieglungsstangen 18 im verriegelten Zustand durch Aussparungen 21 in einer Überfahrnase 22 unterhalb der Rückwandtüren 10 geführt. Die Aussparungen 21 sind nach hinten geöffnet, so dass die Rückwandtüren 10 problemlos geöffnet werden können, wenn die formschlüssigen Verbindungen der Verrieglungsstangen 18 mit den zugehörigen Schlössern 20 zuvor gelöst worden sind. Hierzu sind an den an der Rückwandtür 10 gehaltenen Verriegelungsstangen 18 entsprechende Handgriffe 23 zur Betätigung der Verriegelungsstangen 18 durch den Fahrer des Nutzfahrzeugs 1 vorgesehen. Unterhalb der Überfahrnase 22 ist eine Reihe von Rammpuffern 24 vorgesehen, zwischen denen die Schlösser 20 der Rückwand 8 und Rückwandanschläge 25 zur Anlage an Ladebordanschläge der in der Gebrauchsstellung angeordneten Ladebordwand 12 vorgesehen sind.

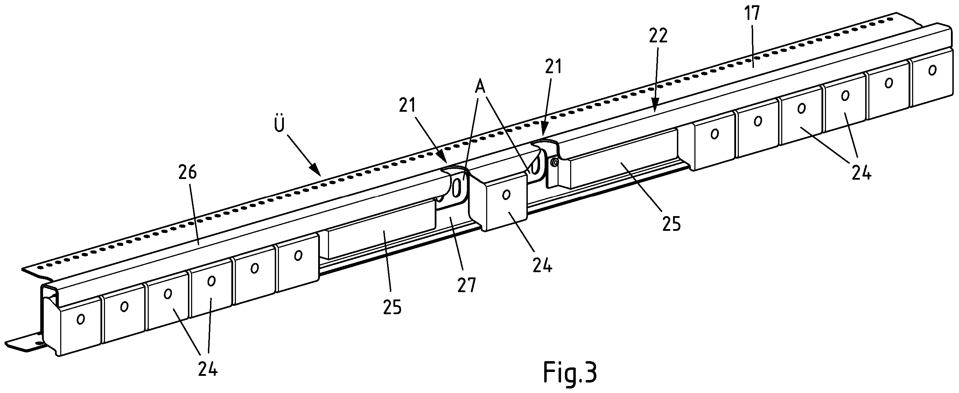

In der Fig. 3 ist der untere Querholm 17 des Rückwandrahmens 9 mit seinen Anbauteilen in einer perspektivischen Ansicht dargestellt. Die Rückwandtüren 10, die Verriegelungsstangen 18 und die Schlösser 20 des Rückwandrahmens 9 sind dabei weggelassen worden. Die Schlösser 20 sind tatsächlich jedoch in Aussparungen A in der Überfahrnase 22 vorgesehen und dort mit dem unteren Querholm 17 verschraubt. Die Überfahrnase 22 weist bei dem Ausführungsbeispiel der Fig. 3 im Überfahrbereich Ü einen oberen etwa horizontal und damit wenigstens im Wesentlichen parallel zum Ladeboden ausgerichteten Überfahrschenkel 26 und einen senkrecht dazu und parallel zum unteren Querholm 17 einen Montageschenkel 27 auf. Der Montageschenkel 27 liegt dabei wenigstens im Wesentlichen flächig an der Rückseite des unteren Querholms 17 an. Dem Montageschenkel 27 sind auch die Rammpuffer 24 und die Rückwandanschläge 25 zugeordnet. Mithin sind auch die Rammpuffer 24 und die Rückwandanschläge 25 in horizontaler Richtung hinter dem unteren Querholm 17 angeordnet. Der nicht dargestellte Ladeboden des Aufbaus 4 schließt sich an das innere Ende des unteren Querholms 17 an und kann mit diesem über einen Verbindungsbereich überlappend vorgesehen sein.

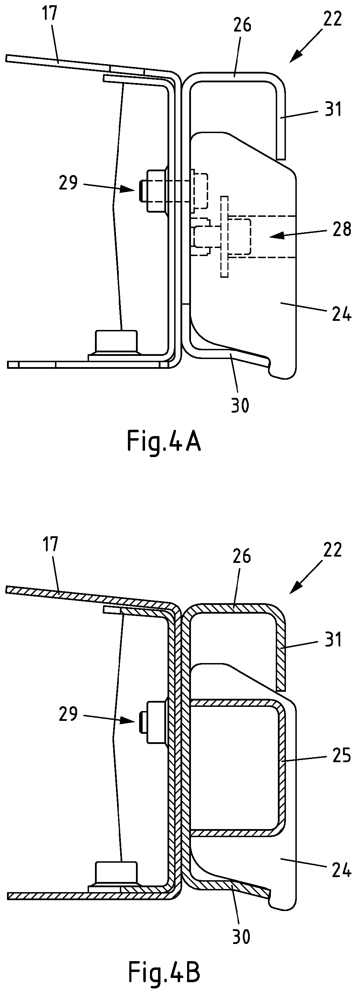

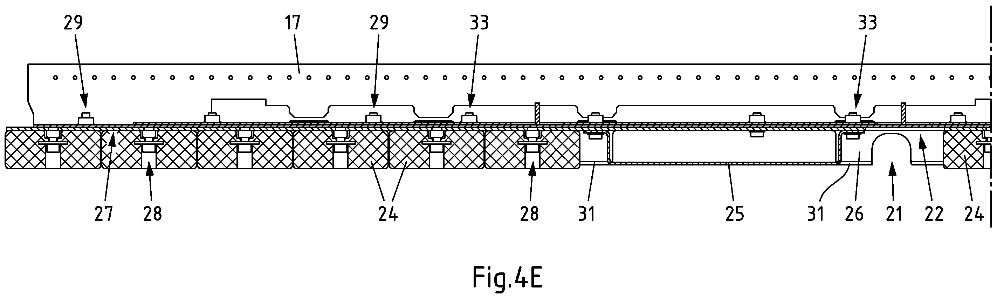

In der Fig. 4A ist der untere Querholm 17 des Rückwandrahmens 9 in einem seitlichen Schnitt dargestellt. Dieser Schnitt ist etwa senkrecht zu dem in der Fig. 4E dargestellten Schnitt durch den unteren Querholm 17 des Rückwandrahmens 9 ausgerichtet. In der Fig. 4A ist der Schnitt durch einen Rammpuffer 24 vorgesehen. Der Rammpuffer 24 ist dabei durch eine Schraubverbindung 28 lösbar mit dem Montageschenkel 27 der Überfahrnase 22 verbunden, während der Montageschenkel 27 der Überfahrnase 22 über eine Schraubverbindung 29 mit dem unteren Querholm 17 des Rückwandrahmens 9 verbunden ist. Die dargestellt und insoweit bevorzugte Überfahrnase 22 ist im Querschnitt etwa U-förmig ausgebildet und weist einen unteren Steg 30 auf, der analog zu dem oberen Überfahrschenkel 26 gegenüber dem unteren Querholm 17 nach hinten vorsteht. Der Überfahrschenkel 26 weist zudem noch einen nach unten umgebogenen Rand 31 auf, der sich beim dargestellten Überfahrschenkel 26 etwa parallel zum unteren Querholm 17 bzw. dem Montageschenkel 27 der Überfahrnase 22 erstreckt. Der hintere Rand 31 des Überfahrschenkels 26 wird wie der untere Steg 30 der Überfahrnase 22 nach hinten von den Rammpuffern 24 überragt. Dabei erstrecken sich die Rammpuffer 24 wenigstens im Wesentlichen vom freien Ende des hinteren Rands 31 des Überfahrschenkels 26 bis über den unteren Steg 30der Überfahrnase 22 nach unten hinaus.

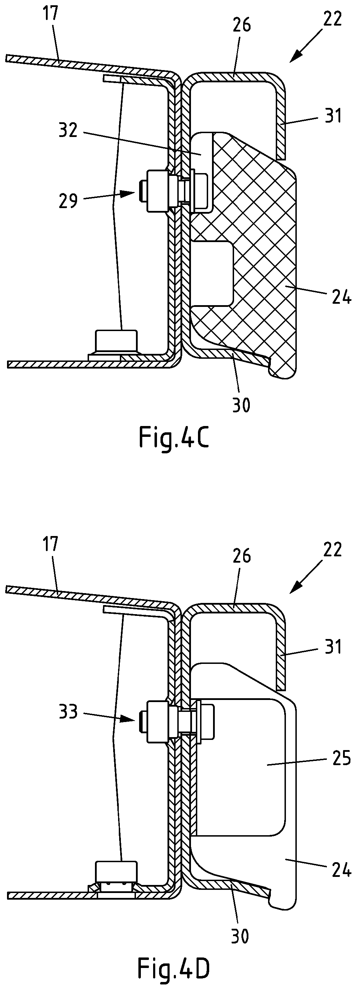

In der Fig. 4B ist ein Schnitt durch einen Rückwandanschlag 25 dargestellt. Der Rückwandanschlag 25 weist in dem dargestellten Abschnitt sowohl in einer Richtung senkrecht zum unteren Querholm 17 als auch in einer Richtung parallel zum unteren Querholm 17 einen U-förmigen Querschnitt auf. Auch der Rückwandanschlag 25 wird nach hinten von den Rammpuffern 24 überragt. Wie in der Fig. 4C dargestellt ist, weisen wenigstens einzelne Rammpuffer 24 eine Aussparung 32 zur Aufnahme der Schraubverbindung 29 zwischen der Überfahrnase 22 und dem unteren Querholm 17 des Rückwandrahmens 9 auf. In der Fig. 4D ist eine Schraubverbindung 33 zwischen dem Rückwandanschlag 25 und dem unteren Querholm 17 dargestellt. Über die entsprechende Schraubverbindung 33 ist nicht nur der Rückwandanschlag 25, sondern auch der Montageschenkel 27 der Überfahrnase 22 mit dem unteren Querholm 17 verbunden.

Die entsprechenden, zuvor beschriebenen Verbindungen sind grundsätzlich auch in der Fig. 4E dargestellt, in der der linke Teil des unteren Querholms 17 des Rückwandrahmens 9 dargestellt ist. Der rechte Teil des unteren Querholms 17 ist im Wesentlichen spiegelsymmetrisch ausgebildet, weshalb eine Darstellung auch des rechten Teils des Querholms 17 vorliegend entbehrlich ist.

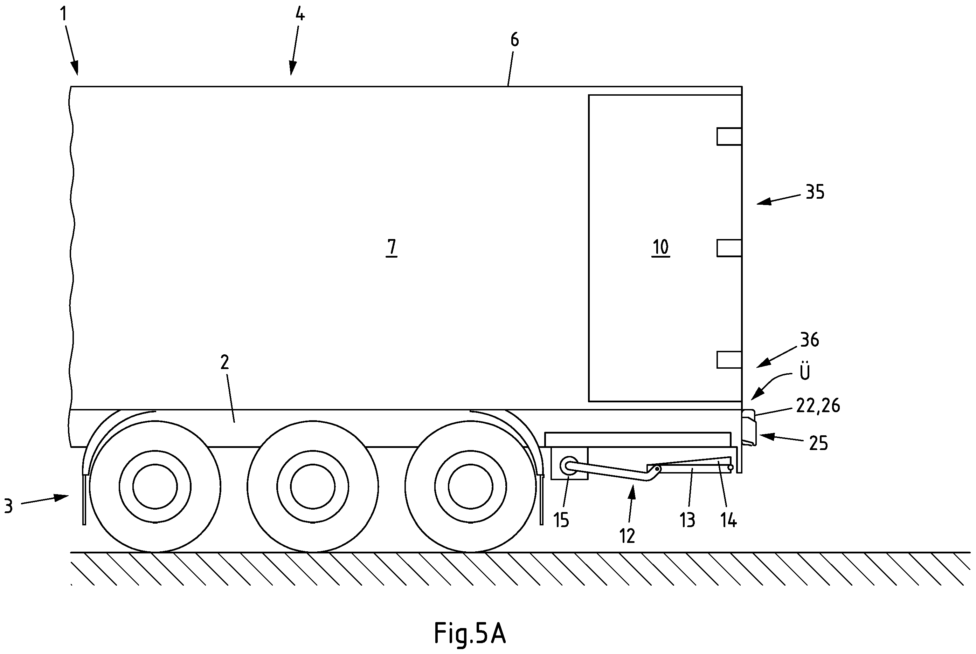

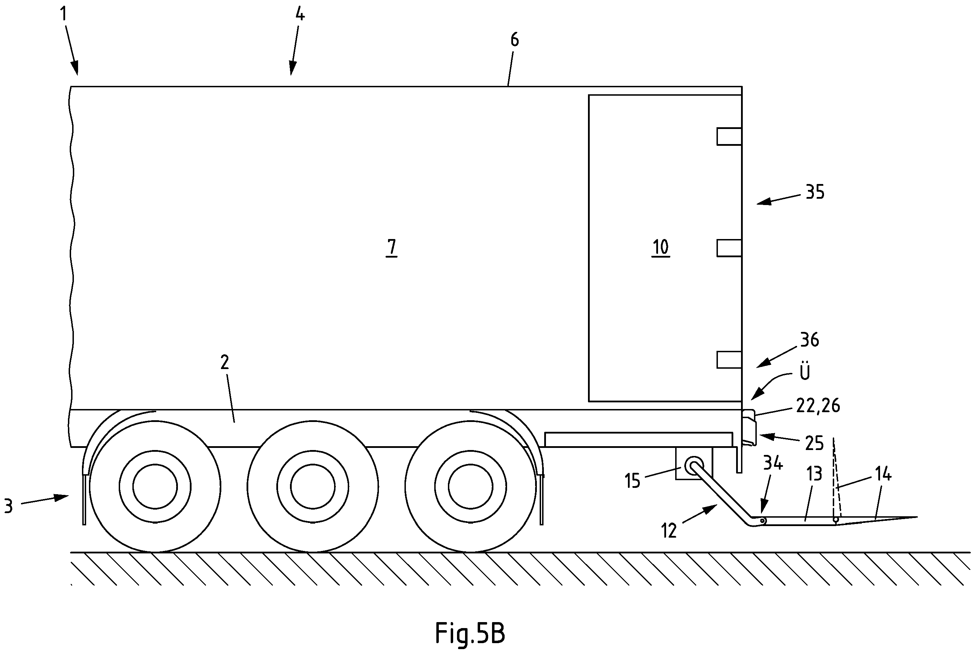

In der Fig. 5A-C ist das Nutzfahrzeug 1 in einer Seitenansicht dargestellt, wobei die Ladebordwand 12 in verschiedenen Stellungen während des Verstellens der Ladebordwand 12 von der Nichtgebrauchsstellung in die Gebrauchsstellung angeordnet ist. In der Fig. 5A ist die Ladebordwand 12 unterhalb des Aufbaus 4 in der Nichtgebrauchsstellung angeordnet, in der das Nutzfahrzeug 1 verfahren wird. Die Ladebordwand 12 umfasst zwei Bordwandteile 13,14, die in der Nichtgebrauchsstellung aufeinander geschwenkt und mithin platzsparend übereinander angeordnet sind. Mittels eines Ladebordmechanismus 15 kann die Ladebordwand 12 abgesenkt und nach hinten verstellt werden. Gleichzeitig kann der hintere Bordwandteil 14 gegenüber dem vorderen Bordwandteil 13 nach hinten geschwenkt werden, so dass die beiden Bordwandteile 13,14 hintereinander angeordnet sind, wie dies in der Fig. 5B dargestellt ist. Des Weiteren sind in dieser Stellung die Rückwandtüren 10 in einer geöffneten Stellung neben den Seitenwänden 7 des Aufbaus 4 dargestellt.

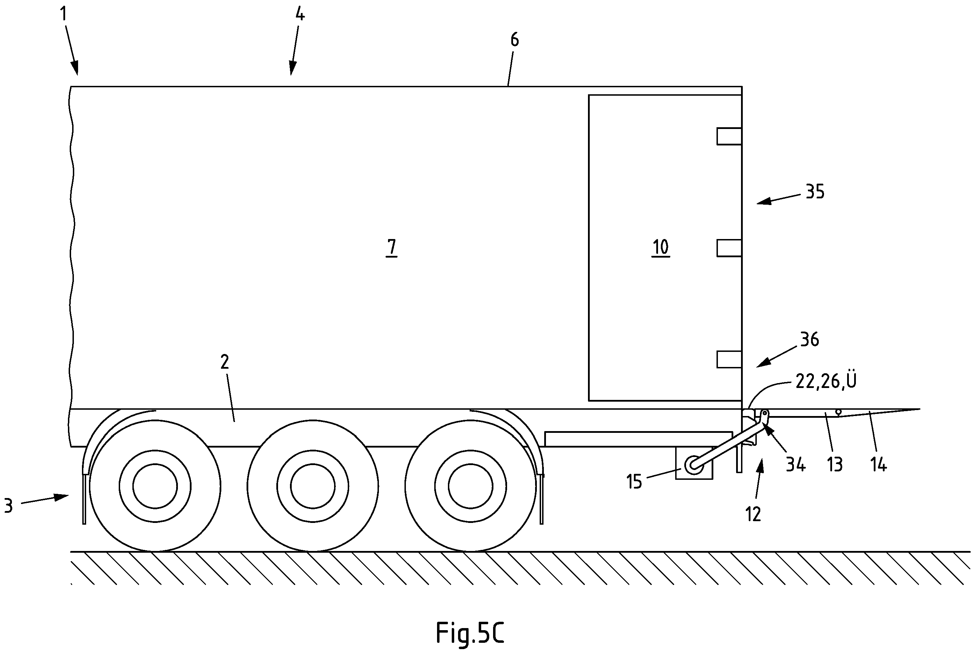

In einem nachfolgenden Schritt kann die Ladebordwand 12 angehoben werden, bis diese in horizontaler Richtung hinter dem unteren Querholm 17 angeordnet ist. In der entsprechenden, in der Fig. 5C dargestellten Gebrauchsstellung sind die Rückwandanschläge 25 mit korrespondierenden Ladebordanschlägen 34 der Ladebordwand 12 in Anlage. In dieser Stellung kann beispielsweise ein Hubwagen von der Ladebordwand 12 in den Laderaum 35 des Aufbaus 4 und zurück verfahren werden. Der Hubwagen rollt dabei in einem Überfahrbereich Ü über den Überfahrschenkel 26 der Überfahrnase 22, um zu vermeiden, dass ein ansonsten vorgesehener Spalt zwischen dem Ladeboden 36 und der Ladebordwand 12 das Ein- und Ausfahren unnötig erschwert oder gar verhindert.

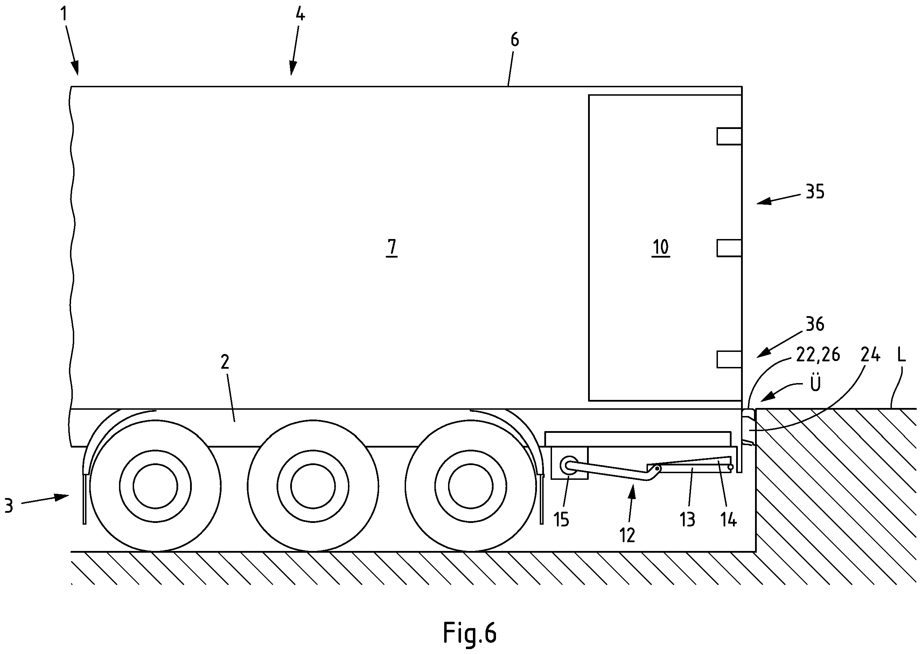

In der Fig. 6 ist das Nutzfahrzeug 1 während des Be- und/oder Entladens an einer Laderampe L mit geöffneten Rückwandtüren 10 dargestellt. Das Nutzfahrzeug 1 stößt dabei mit den Rammpuffern 24 an die Laderampe L an. Die Überfahrnase 22, die Schlösser 20 und die Rückwandanschläge 25 gelangen infolgedessen jedoch nicht in Anlage an die Laderampe L. Das Be- und/oder Entladen kann mittels Hubwagen erfolgen, die zwischen der Laderampe L und dem Ladeboden 36 des Aufbaus 4 hin und her verfahren werden können und dabei über den Überfahrschenkel 26 der Überfahrnase 22 abrollen können, um zu vermeiden, dass ein Spalt zwischen dem Ladeboden 36 und der Laderampe L das Ein- und Ausfahren in und aus dem Laderaum 35 unnötig erschwert oder gar verhindert. Die Ladebordwand 12 wird für das Be- und/oder Entladen des Aufbaus 4 über die Laderampe L nicht benötigt, weshalb die Ladebordwand 12 währenddessen in der Nichtgebrauchsstellung unter dem Aufbau 4 verharrt.

### Bezugszeichen

- 1: Nutzfahrzeug
- 2: Chassis
- 3: Fahrwerk
- 4: Aufbau
- 5: Stirnwand
- 6: Dach
- 7: Seitenwand
- 8: Rückwand
- 9: Rückwandrahmen
- 10: Rückwandtür
- 11: Scharniere
- 12: Ladebordwand
- 13: vorderer Bordwandteil
- 14: hinterer Bordwandteil
- 15: Ladebordmechanismus
- 16: Stütze
- 17: unterer Querholm
- 18: Verriegelungsstange
- 19: Nocken
- 20: Schloss
- 21: Aussparung
- 22: Überfahrnase
- 23: Handgriff
- 24: Rammpuffer
- 25: Rückwandanschlag
- 26: Überfahrschenkel
- 27: Montageschenkel
- 28: Schraubverbindung
- 29: Schraubverbindung
- 30: Rand
- 31: Steg
- 32: Aussparung
- 33: Schraubverbindung
- 34: Ladebordanschlag
- 35: Laderaum
- 36: Ladeboden
- A: Aussparung
- L: Laderampe
- Ü: Überfahrbereich
- Z: Zugmaschine

## Patentansprüche

1. Nutzfahrzeug (1), insbesondere Lastkraftwagen, Anhänger oder Sattelauflieger, mit einem Aufbau (4), insbesondere Kofferaufbau, und einer von einer Nichtgebrauchsstellung in eine Gebrauchsstellung wenigstens teilweise hinter dem Aufbau (4) und zurück verstellbaren Ladebordwand (12), wobei der Aufbau (4) einen einen unteren Querholm (17) umfassenden Rückwandrahmen (9) aufweist, wobei dem unteren Querholm (17) wenigstens ein Rückwandanschlag (25) und wenigstens eine Überfahrnase (22) zugeordnet ist, wobei die Ladebordwand (12) in der Gebrauchsstellung mit wenigstens einem Ladebordanschlag (34) an dem wenigstens einen Rückwandanschlag (25) in Anlage ist,
**dadurch gekennzeichnet, dass** die wenigstens eine Überfahrnase (22) und der wenigstens eine Rückwandanschlag (25) mit dem unteren Querholm (17) des Rückwandrahmens (9) verschraubt sind und dass der wenigstens eine Rückwandanschlag (25) unterhalb des Überfahrbereichs (Ü) der wenigstens einen Überfahrnase (22) angeordnet ist.

2. Nutzfahrzeug nach Anspruch 1,
**dadurch gekennzeichnet, dass** die Ladebordwand (12) in der Nichtgebrauchsstellung unterhalb des Aufbaus (4) angeordnet ist und dass, vorzugsweise, die Ladebordwand (12) zwei um eine Schwenkachse gegeneinander faltbare Bordwandteile (13,14) aufweist und dass die Bordwandteile (13,14) in der Nichtgebrauchsstellung aufeinander gefalten sind.

3. Nutzfahrzeug nach Anspruch 1 oder 2,
**dadurch gekennzeichnet, dass** die wenigstens eine Überfahrnase (22) und der wenigstens eine Rückwandanschlag (25) separate Bauteile sind.

4. Nutzfahrzeug nach einem der Ansprüche 1 bis 3,
**dadurch gekennzeichnet, dass** die wenigstens eine Überfahrnase (22) und der wenigstens eine Rückwandanschlag (25) separat mit dem unteren Querholm (17) verschraubt sind.

5. Nutzfahrzeug nach einem der Ansprüche 1 bis 4,
**dadurch gekennzeichnet, dass** die wenigstens eine Überfahrnase (22) einen oberen Überfahrschenkel (26) und einen unteren Montageschenkel (27) aufweist und dass, vorzugsweise, der Überfahrschenkel (26) wenigstens im Wesentlichen horizontal und der Montageschenkel (27) wenigstens im Wesentlichen vertikal ausgerichtet ist.

6. Nutzfahrzeug nach Anspruch 5,
**dadurch gekennzeichnet, dass** der Montageschenkel (27) mit dem unteren Querholm (17) des Rückwandrahmens (9) verschraubt ist und dass, vorzugsweise, der Montageschenkel (27) rückseitig zu dem unteren Querholm (17) und überlappend mit dem unteren Querholm (17) vorgesehen ist.

7. Nutzfahrzeug nach einem der Ansprüche 1 bis 6,
**dadurch gekennzeichnet, dass** der wenigstens eine Rückwandanschlag (25) mit der wenigstens einen Überfahrnase (22), insbesondere mit dem Montageschenkel (27) der wenigstens eine Überfahrnase (22) verschraubt ist.

8. Nutzfahrzeug nach einem der Ansprüche 1 bis 7,
**dadurch gekennzeichnet, dass** der wenigstens eine Rückwandanschlag (25) einen wenigstens im Wesentlichen U-förmigen Querschnitt senkrecht zum unteren Querholm (17) des Rückwandrahmens (9) aufweist und/oder dass der wenigstens eine Rückwandanschlag (25) einen wenigstens im Wesentlichen U-förmigen Querschnitt parallel zum unteren Querholm (17) des Rückwandrahmens (9) und zu einem Ladeboden (36) des Aufbaus (4) aufweist.

9. Nutzfahrzeug nach einem der Ansprüche 1 bis 8,
**dadurch gekennzeichnet, dass** an dem unteren Querholm (17) des Rückwandrahmens (9) mehrere gegenüber der wenigstens einen Überfahrnase (22) und dem wenigstens einen Rückwandanschlag (25) nach hinten vorstehende Rammpuffer (24) vorgesehen sind und dass, vorzugsweise, die Rammpuffer (24) mit dem unteren Querholm (17) verschraubt sind.

10. Nutzfahrzeug nach Anspruch 9,
**dadurch gekennzeichnet, dass** die Rammpuffer (24) mit der wenigstens einen Überfahrnase (22) verschraubt sind und dass, vorzugsweise, die Rammpuffer (24) mit dem Montageschenkel (27) der wenigstens eine Überfahrnase (22) verschraubt sind.

11. Nutzfahrzeug nach Anspruch 9 oder 10,
**dadurch gekennzeichnet, dass** die Rammpuffer (24) und der wenigstens eine Rückwandanschlag (25) wenigstens im Wesentlichen in einer Reihe längs des unteren Querholms (17) des Rückwandrahmens (9) angeordnet sind und dass, vorzugsweise, der wenigstens eine Rückwandanschlag (25) zwischen wenigstens zwei Rammpuffern (24) angeordnet ist.

12. Nutzfahrzeug nach einem der Ansprüche 1 bis 11,
**dadurch gekennzeichnet, dass** am Rückwandrahmen (9) Rückwandtüren (10) festgelegt sind und dass in der wenigstens einen Überfahrnase (22), insbesondere in dem Überfahrschenkel (26), wenigstens eine Aussparung (21) zum Durchgreifen einer Verriegelungsstange (18) einer Rückwandtür (10) vorgesehen ist.

13. Nutzfahrzeug nach Anspruch 12,
**dadurch gekennzeichnet, dass** wenigstens ein Schloss (20) zum formschlüssigen Halten eines Nockens (19) der Verriegelungsstange (18) mit dem unteren Querholm (17) des Rückwandrahmens (9) verschraubt ist.

14. Nutzfahrzeug nach Anspruch 13,
**dadurch gekennzeichnet, dass** das wenigstens eine Schloss (20) durch wenigstens eine Aussparung (A) in der wenigstens einen Überfahrnase (22), insbesondere im Montageschenkel (27), hindurchgreift.

15. Nutzfahrzeug nach Anspruch 12 oder 14,
**dadurch gekennzeichnet, dass** das wenigstens eine Schloss (20) sowie die Rammpuffer (24) und/oder der wenigstens eine Rückwandanschlag (25) wenigstens im Wesentlichen in einer Reihe längs des unteren Querholms (17) des Rückwandrahmens (9) angeordnet sind und dass, vorzugsweise, das wenigstens eine Schloss (20) zwischen wenigstens zwei Rückwandanschlägen (25) und/oder zwischen wenigstens zwei Rammpuffern (24) angeordnet ist.
